# EUROPEAN PATENT SPECIFICATION

(11) **EP 1 693 828 B1**
(45) Date of publication and mention of the grant of the patent: **23.01.2008**
(21) Application number: 05003670.6
(22) Date of filing: 21.02.2005
(51) Int. Cl.: G10L 15/18, G10L 15/28

(54) **Multilingual speech recognition**
Multilinguale Spracherkennung
Reconnaissance multilingue de la parole

(43) Date of publication of application: 23.08.2006
(73) Proprietor: Harman Becker Automotive Systems GmbH, 76307 Karlsbad (DE)
(72) Inventor: Hennecke, Marcus, Dr., 89075 Ulm (DE); Krippgans, Thomas, 89077 Ulm (DE)
(74) Representative: Bertsch, Florian Oliver

(56) References cited:
- EP-A- 1 217 610
- DE-A1- 10 207 895
- US-A1- 2004 020 438
- ZISSMAN MARC A ET AL: "Automatic language identification of telephone speech messages using phoneme recognition and n-gram modeling" PROC ICASSP IEEE INT CONF ACOUST SPEECH SIGNAL PROCESS; PROCEEDINGS - ICASSP, IEEE INTERNATIONAL CONFERENCE ON ACOUSTICS, SPEECH AND SIGNAL PROCESSING 1994 IEEE, PISCATAWAY, NJ, USA, vol. 1, 1994, pages I.305-I.308, XP002330667
- GEORG STEMMER ET AL: "Acoustic Modeling of Foreign Words in a German Speech Recognition System" EUROSPEECH 2001, vol. 4, September 2001 (2001-09), pages 2745-2748, XP007004964
- XIA WANG ET AL: "An embedded multilingual speech recognition system for Mandarin, Cantonese, and English" NATURAL LANGUAGE PROCESSING AND KNOWLEDGE ENGINEERING, 2003. PROCEEDINGS. 2003 INTERNATIONAL CONFERENCE ON OCT. 26-29, 2003, PISCATAWAY, NJ, USA,IEEE, 26 October 2003 (2003-10-26), pages 758-764, XP010688618 ISBN: 0-7803-7902-0

## Description

The present invention relates to a speech recognition method and a speech recognition apparatus for selecting, via speech input, an item from a list of items.

### RELATED ART

In many applications, such as navigation, name dialing or audio/video player control, it is necessary to select an item or an entry from a large list of items or entries, such as proper names, addresses or music titles. It is often that the entries have names in different languages. If an entry is to be selected by speech recognition, a problem arises that neither the language of the intended entry nor the language in which the name of the intended entry is pronounced is known. This complicates the speech recognition process, in particular when the user pronounces a foreign language name for an entry in their own (different) mother language. Let's assume for illustration that in a navigation application a German user wants to select a destination by a street having an English name. The speech recognizer should be able to recognize this English street name even though the speech recognizer is configured for a German user and the user (mis)pronounces the street name in German.

In order to enable speech recognition with moderate memory and processor resources, a two step speech recognition approach is frequently applied. In the first step, a phoneme sequence (string) is recognized by a phoneme recognizer. However, the recognition accuracy of phoneme recognition is usually not acceptable and many substitutions insertions and deletions of phonemes occur. The phoneme string is then compared with a possibly large list of phonetically transcribed items to determine a shorter candidate list of best matching items. The candidate list is then supplied to the speech recognizer as a new vocabulary for a second recognition pass. In this second step, the most likely entry in the list for the same speech input is determined by matching phonetic acoustic representations of the entries enlisted in the candidate list to the acoustic input and determining the best matching entry. This approach saves computational resources since the phoneme recognition performed in the first step is less demanding and the computational expensive second step is performed only with a small subset of the large list of entries.

A two step speech recognition approach is known from DE 102 07 895 A1.

The phoneme recognizer used in the first step is, however, usually trained for the recognition of phonemes of a single language. Thus, the phoneme recognition for foreign language words is usually unsatisfactory, in particular since the phoneme sets of different languages are not identical and the phoneme recognizer is trained using only speech data of a single language.

### SUMMARY OF THE INVENTION

There is a need to improve multilingual speech recognition, in particular when performed using the two step speech recognition approach for selecting an item from a list of items.

This need is met by the independent claims. The dependent claims refer to preferred embodiments of the invention.

A two step speech recognition apparatus for selecting an item from a list of items via speech input comprises a subword unit speech recognition means for recognizing a string of subword units for the speech input, a subword unit comparing means for comparing the recognized string of subword units with subword unit transcriptions of the list items and for generating a candidate list of the best matching items based on the comparison results, anda second speech recognition means for recognizing and selecting an item from the candidate list which best matches the speech input at large.

The subword unit speech recognition means performs a first pass of speech recognition for determining a string of subword units which best matches the speech input. The subword unit speech recognition means preferably recognizes any sequence of subword units without any restriction. Thus, the subword unit speech recognition is independent of the items in the list and their phonetic transcriptions and requires only little computational effort.

The subword unit speech recognition is preferably performed by comparing the speech input with a plurality of subword units for a certain language. A measure of similarity between a subword unit and at least a part of the speech input may be calculated and the best matching string of subword units for the entire speech input in terms of the similarity measure may be generated.

According to a preferred embodiment of the invention, a subword unit corresponds to a phoneme or a syllable of a language or any other units such as larger groups of phoneme, or smaller groups such as demiphone . In this case, the subword unit recognition is a phoneme/syllable recognition which determines a sequence of phonemes/ syllables that best matches the speech input. However, the possible sequence of subword units for recognition is not restricted by the vocabulary of the application, i. e., the phoneme transcriptions of the list items. Thus, the phoneme recognizer applied in the first recognition step may generate a phoneme sequence which does not perfectly match any phoneme transcription of the list. The candidate list of the best matching items may therefore be considered simply as a lead to items having a relative high likelihood of appearance for a given acoustic speech input. These items are then offered to the second speech recognizer for further comparing with the speech input in the second recognition step.

In order to allow a multilingual speech input, it is preferred that at least two subword unit speech recognition means are provided which each recognize subword units of a different language. For example, a phoneme recognizer for German and a phoneme recognizer for English operate in parallel or subsequently and respectively output a German phoneme string and an English phoneme string for the received speech input. It is, of course, possible to add additional phoneme recognizers in further languages depending on the particularities of the application. It is preferred that one of the subword unit speech recognition means corresponds to the mother language or nature language of the user, if known, because this is the most likely language of speech inputs.

The subword unit comparing means preferably compare the strings of subword units recognized by the at least two subword unit speech recognition means for the individual languages with the subword unit transcriptions of the list items. The subword unit comparing means may match the recognized subword unit strings with the list item subword unit transcriptions, determine the best matching items, and generate the candidate list for the best matching items.

The candidate list is then supplied, for the second recognition step, as a recognition vocabulary to the second speech recognition means, where the best matching item is determined based on phonetic acoustic representations of the individual items. The second speech recognition means may be configured to enable directly the recognition of the item names, such as names of persons, streets, addresses, music titles, or music artists. For this purpose, it is preferred to restrict the second speech recognizer to recognize only subword unit sequences that correspond to subword unit transcriptions of list items. This is referred to as word recognition and may be implemented by a hidden Markov model (HMM) speech recognizer which uses subword units and a recognition vocabulary (grammar) that corresponds to the subword unit transcriptions of the list items.

The second speech recognition means preferably compares the speech input with acoustic representations or accustic models (such as HMMs) of the list items, calculates a measure of similarity between an acoustic representation of a list item and the speech input, and selects the list item having the best matching acoustic representation for the speech input in terms of the similarity measure. In other words, the second speech recognition means determines the best matching item for the acoustic input from the list while the subword unit speech recognition means determines the best matching subword unit string.

The second speech recognition means is preferably implemented as an integrated speech recognizer using subword unit acoustic representations (e. g., phoneme HMMs) and a recognition vocabulary generated from the subword unit transcriptions of the list items. The subword unit recognizer and the second speech recognizer may be implemented using the same speech recognition algorithm, HMM models and software operating on a microprocessor. While the subword unit recognizer may be configured to operate with a free looping subword unit grammar allowing any subword unit sequence, the second recognizer may be configured to recognize only sequences of subword units that correspond to subword unit transcriptions and a recognition vocabulary given by the list items. Further, since the second speech recognizer operates only on a subset of the items (i.e. the candidate list) and, thus, requires less computation, the acoustic representations applied for determining the best matching item for the acoustic input may be more complex and elaborate in order to achieve a higher accuracy. This means that e. g., tri-phone HMMs may be used for the second speech recognition pass.

Further, speech recognition control means to control the operation of the subword unit speech recognition means may be provided. The speech recognition control means may select and activate at least two of the subword unit speech recognition means and input the recognized subword unit strings generated by the at least two activated subword unit speech recognition means to the subword unit comparing means. Thus, only a selected subset of the plurality of subword unit speech recognition means is applied for phoneme recognition and the generation of subword unit strings. Subword unit speech recognition means which are not expected to provide a reasonable result do not take up resources. By appropriately selecting the subword unit speech recognition means for a particular application or a context, the computational load of the phoneme recognition is reduced. The activation of the at least two selected subword unit speech recognition means may be based on a preferred language of a user which may be preselected for the speech recognition apparatus, e. g., set to the language of the region where the apparatus is usually in use (i.e., stored in configuration information of the apparatus), or may be selected by the user using language selection means such as an input device for changing the apparatus configuration. Preferably, the preferred language is the mother language of the user of the speech recognition apparatus since this is the most likely language of usage.

According to a preferred embodiment of the invention, language identification means for identifying the language or languages of the list items (or their names) are provided. By identifying the language(s) of the list items, the most likely language(s) for the pronunciation of the names of the list items may be determined. This allows activating the corresponding subword unit speech recognition means so that controlled subword unit recognition for the language(s) of the list items may be performed. Thus, an automatic selection of the designated subword unit recognizers for a particular application is possible. This further reduces the computational load for the subword unit recognition since only the needed subword unit recognizers are activated.

The dynamic subword unit recognizer selection may be independent for different applications in which the speech recognition apparatus of the invention is deployed. For instance, in a car environment, a German and an English subword unit recognizer may be activated for a name dialing application while a German and a French subword unit recognizer may operate in an address selection application for navigation performed with the same speech recognition apparatus.

The language identification of a list item may be based on a language identifier stored in association with the list item. In this case, the language identification means determine the set of all language identifiers for the list of an application and select respectively the corresponding subword unit speech recognizers. Alternatively, the language identification of a list item may be determined based on a phonetic property of the subword unit transcription of the list item. Since typical phonetic properties of subword unit transcriptions of different languages usually vary among the languages and have characteristic features that may be detected, e. g., by rule sets applied to the subword unit transcriptions, the language identification of the list items may be performed without the need of stored language identifiers.

In order to reduce the computational effort for comparing the subword unit strings with the subword unit transcriptions of the list items, the subword unit comparing means may compare a recognized subword unit string output from a subword unit speech recognition means for a certain language only with subword unit transcriptions corresponding to the same language. For instance, English subword unit strings will be compared only to English subword unit transcriptions and French subword unit strings will be compared only to French subword unit transcriptions. A subword unit transcription may be tagged with a language identifier or the language identification from the corresponding list item may be applied for that purpose. This reduces the necessary computation time and improves the accuracy of the generated candidate list since accidental matches of subword unit strings with subword unit transcriptions corresponding to different languages are prevented.

According to a preferred embodiment of the invention, a matching score for a list item indicating a match of a recognized subword unit string with the subword unit transcription of the list item is calculated. The list items may be ranked according to their matching scores in order to determine the best matching list items with the best scores from the list of items. The best matching items may then be listed in the candidate list to be supplied as a recognition vocabulary to the second speech recognition means. The matching score is preferably calculated using a metric which accounts for insertions and deletions of subword units, for example, by applying the dynamic programming algorithm. This approach has the advantage of considering the potentially inaccurate characteristics of subword unit recognition which is usually susceptible for misrecognition of subword units of short duration.

It is preferred to calculate first scores for matches of a subword unit transcription of a list item with each of the subword unit strings output from the subword unit recognizers for different languages. Thus, a subword unit transcription of a list item receives a plurality of first scores indicating each the degree of correspondence with the subword unit strings of the different languages. Assuming that the subword unit string of the language that corresponds to the language of the list item matches the subword unit transcription of the list item best, the best first score calculated for the item may be selected as matching score of the item and used in ranking the plurality of items from the list and generating the candidate list. This has the advantage of calculating a matching score for each list item based on subword unit strings for different languages without knowing the language of the list item.

The computational effort for comparing the subword unit strings from the different subword unit recognizers with the potentially large number of subword unit transcriptions of the list items may be further reduced by first selecting a predetermined subword unit speech recognizer, e. g., corresponding to the user's mother language, and comparing the string of subword units recognized from the predetermined subword unit speech recognizer with the subword unit transcriptions of items of the entire list. A larger than usual candidate list of the best matching items is then generated. The comparison of the subword unit strings recognized from the remaining subword unit recognizers is then performed only with subword unit transcriptions of items listed in the candidate list. Since the candidate list is usually much smaller than the original list of items, the computation and memory required for the comparison step is reduced. Next, the candidate list may be re-ranked based on the matching scores of the candidate list items for the different languages so that items which had been ranked lower with regard to the language of the predetermined subword unit recognizer (but high enough to be included in the candidate list) may receive better ranks with regard to other languages. For example, the German phoneme recognizer (corresponding to the mother language of the user) is applied first and a large candidate list is generated based on the matching scores of the list items with the German phoneme string. Then, the items listed in the candidate list are re-ranked based on matching scores for English and French phoneme strings generated from respective phoneme recognizers of these languages.

It is further possible that a list item has a plurality of subword unit transcriptions in different languages associated. In this case, it is preferred that a recognized subword unit string for a certain language is compared only with subword unit transcriptions of an item corresponding to the same language. Since only compatible subword unit strings and subword unit transcriptions of the same language are compared, the computational effort is reduced and accidental matches are avoided. The matching score of a list item may be calculated as the best matching score of subword unit transcriptions of the item with subword unit strings in the corresponding language.

In order to enhance the accuracy of the subword unit recognition, it is possible to generate a graph of subword units that match the speech input. A graph of subword units may comprise subword units and possible alternatives that correspond to parts of the speech input. The graph of subword units may be compared to the subword unit transcriptions of the list items and a score for each list item may be calculated, e. g., by using appropriate search techniques such as dynamic programming.

### BRIEF DESCRIPTION OF PREFFERED EMBODIMENTS

These and other potential objects, features and advantages of the present invention will appear more fully from the following description of examples for embodiments of the invention. It is to be understood, however, that the scope of the present invention is not limited by any one embodiment shown in the accompanying drawings, wherein
Fig. 1 shows schematically a speech recognition apparatus according to an embodiment of the present invention;
Fig. 2 shows a flowchart for illustrating the operation of an embodiment of the invention;
Fig. 3 illustrates details of the subword unit comparison step for an embodiment of the present invention; and

Fig. 4 shows a flow diagram for illustrating the comparison of subword unit strings with subword unit transcriptions and the generation of a candidate list according to a preferred embodiment of the invention.

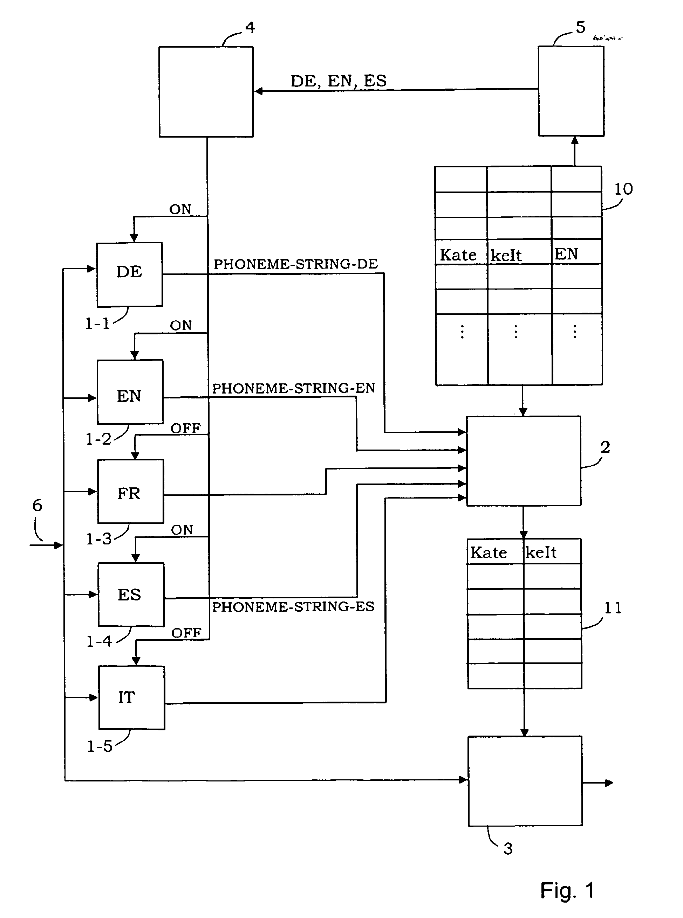

Fig. 1 shows schematically a speech recognition apparatus according to an embodiment of the present invention. Speech input 6 for selecting an item from a list 10 of items from a user is input to a plurality of subword unit speech recognition means 1 configured to recognize phoneme strings for different languages. The phoneme recognizer 1-1 is supplied with characteristic information on German phonemes, e. g., hidden Markov models trained for German phonemes on German speech data. The phoneme recognizers 1-2, 1-3, 1-4, 1-5 are respectively configured to recognize English, French, Spanish, Italian phonemes for the speech input 6. The phoneme recognizers 1-1, 1-2, 1-3, 1-4, 1-5 may operate in parallel using separate recognition modules (e. g., dedicated hardware portions provided on a single chip or multiple chips). Alternatively, the phoneme recognizers 1-1, 1-2, 1-3, 1-4, 1-5 for the different languages may also operate sequentially on the same speech input 6, e. g., using the same speech recognition engine which is configured to operate in different languages by loading phoneme models for the respective language. Each recognizer 1-1, 1-2, 1-3, 1-4, 1-5 generates a respective subword unit string comprising the best matching sequence of subword units for the same speech input 6. Then, in the depicted embodiment, phoneme strings for German (DE), English (EN), French (FR), Spanish (ES), and Italian (IT) are generated and supplied to a subword unit comparing means 2.

In order to reduce the computational load incurred with the phoneme recognition for different languages, language identification means 5 for identifying the language or languages of the items enlisted in the list 10 may be provided. For example, the language identification means 5 scan the list of items in order to determine the language or language of individual items by analyzing the subword unit transcription or the orthographic transcription corresponding to an item for finding specific phonetic properties characteristic for a particular language or by applying a language identifier stored in association with the item.

The list 10 in the depicted embodiment comprises for each item: the name of the item; at least one phonetic transcription of the item; and a language identifier for the item. An example for a name item in a name dialing application is given below:

| | | |
|---|---|---|
| Kate Ryan | \|keIt\|raI\| \|@n\| | enUS |

wherein the phonetic notation in this example uses the Sampa phonetic alphabet and indicates also the syllable boundaries. Apparently, other phonetic notations, alphabets (such as IPA) and language identifiers can be applied, too.

If multiple transcriptions for an item in different languages are provided in the list 10, it is preferred to tag the individual transcriptions with corresponding language identifiers in order to mark the language of the transcription. In this case, an item has different associated languages which will be considered by the language identification means 5. The language identification means 5 may collect all different languages for items or transcriptions in the list 10 and provides a list of identified languages to a speech recognition control means 4.

An example for a list item in an application to select audio files is given below. Here, the audio file may be selected by referring to its title or interpret. The phonetic transcriptions corresponding to the different identifiers of the file may, of course, belong to different languages.

| File | Title | Language of Title | Artist | Language of Interpret |
|---|---|---|---|---|
| Xyz | \|1A\|pRo\|mEs\| (La Promesse) | frBE | \|keIt\|raI\|@n\| (Kate Ryan) | enUS |

The speech recognition control means 4 control the operation of the subword unit speech recognition means 1 and activate the subword unit speech recognizers 1 suitable for the current application based on the language(s) identified by the language identification means 5. Since it is very likely that the user will pronounce the names of list items in their corresponding language(s), it is preferred to activate the speech recognition means 1 for the identified language(s) of the list items. It is further suitable to add the mother language of the user to the identified language(s) (if not already listed) since a user is also likely to pronounce a foreign name in his/her mother language. The addition of the user's mother language has a particular advantage in a navigation application when the user travels abroad. In this case, a situation may arise where a user pronounces a foreign street name in the navigation application using pronunciation rules of his/her mother language. In the example depicted in Fig. 1, the language identification means identifies German, English and Spanish names for entries in the table 10 and supplies the respective information to the speech recognition control means 4 which, in turn, activates the German phoneme recognizer 1-1, the English phoneme recognizer 1-2 and the Spanish phoneme recognizer 1-4. The French phoneme recognizer 1-3 and the Italian phoneme recognizer 1-5 are deactivated since no French or Italian names appear in the list 10.

The subword unit comparing means 2 compare the recognized strings of subword units output from the subword unit speech recognition means 1 with the subword unit transcriptions of the list items as will be explained in more detail below. Based on the comparison results, a candidate list 11 of the best matching items from the list 10 is generated and supplied as vocabulary to the second speech recognition means 3. The candidate list 11 comprises the names and subword unit transcriptions of the selected items. The language identifiers need not be included.

The second speech recognition means 3 are configured to recognize, from the same speech input 6, the best matching item among the items listed in the candidate list 11. Therefore, the speech recognizer 3 compares the speech input 6 with acoustic representations of the candidate list items and calculates a measure of similarity between the acoustic representations and the speech input 6. The speech recognizer 3 is preferably an integrated word (item name) recognizer which uses concatenated subword models for acoustic representation of the list items. The subword unit transcriptions of the candidate list items serve to define the concatenations of subword units for the speech recognition vocabulary. The speech recognizer 3 may be implemented by using the same speech recognition engine as the subword unit recognizers 1, but configured with a different grammar that allows only the recognition of candidate list items. The acoustic representation of a candidate list item may be generated, e. g., by concatenating the phoneme HMM models defined by the phonemic transcription of the items.

The best matching item of the candidate list 11 is selected and corresponding information indicating the selected item is output from the speech recognizer 3. This information may be input as selection to an application such as name dialing, navigation or control of audio equipment. The present invention allows that multilingual speech recognition is applied to select items in different languages from a list. It is of particular advantage for all applications where the names of items to be selected may belong to different languages, such as the selection of audio or video files by title or interpret.

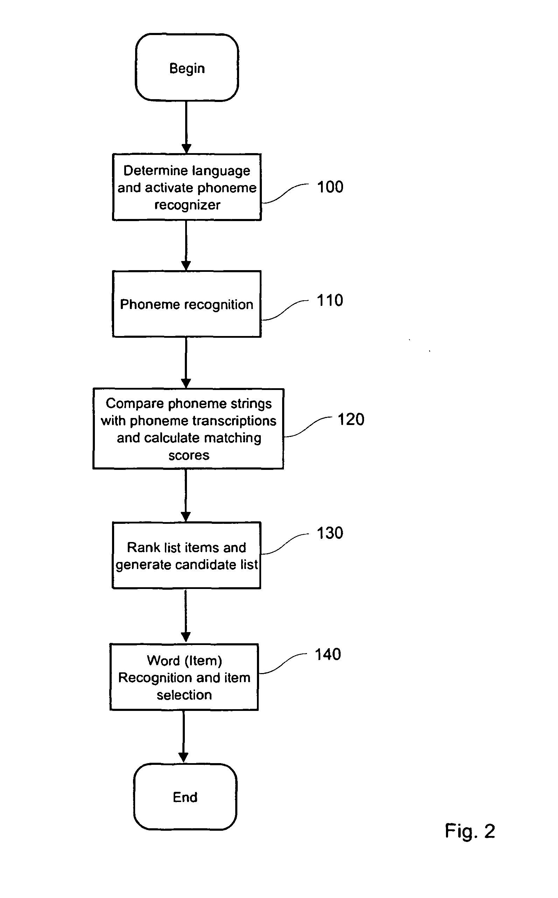

Fig. 2 shows a flowchart for illustrating the operation of the speech recognition apparatus and the speech recognition method according to an embodiment of the invention. In step 100, the necessary languages for an application are determined and their respective phoneme recognizers 1 are activated. The languages may be determined based on language information supplied for the individual list items. As already mentioned, it is preferred to add the mother language of the user.

After the necessary phoneme recognizers are activated, the phoneme recognition for the identified languages is performed in step 110, and phoneme strings for all active languages are generated by the phoneme recognizers 1.

The recognized phoneme strings are then compared with the phoneme transcriptions of the list items in step 120, and a matching score for each list item is calculated. The calculation of the matching score is based on the dynamic programming algorithm to allow the substitutions insertion and/or deletion of phonemes in the phoneme string.

If the language of an item or its phoneme transcription is known, it is preferred to restrict the comparison to the recognized phoneme string of the same language since it is very likely that this pairing has the highest correspondence. Since it is also possible that the user has pronounced a foreign item in his mother language, the phoneme transcription of the item may be further compared to the recognized phoneme string of the user's mother language, wherein the best matching score for the item among all calculated scores of different languages is determined and selected as matching score for the item.

If different pronunciation variants for an item corresponding to different languages are available, it is also possible to compare only recognized phoneme strings with phoneme transcriptions of corresponding languages.

The list items are then ranked according to their matching scores in step 130 and a candidate list of the best matching items is generated. The candidate list 11 may comprise a given number of items having the best matching scores. Alternatively, the number of items in the candidate list 11 may be determined based on the values of the matching scores, e. g., so that a certain relation between the best matching item in the candidate list 11 and the worst matching item in the candidate list 11 is satisfied (for instance, all items with scores having a predetermined distance or ratio to the best score).

In step 140, the "item name" recognition is performed and the best matching item is determined. This item is selected from the list and supplied to the application for further processing.

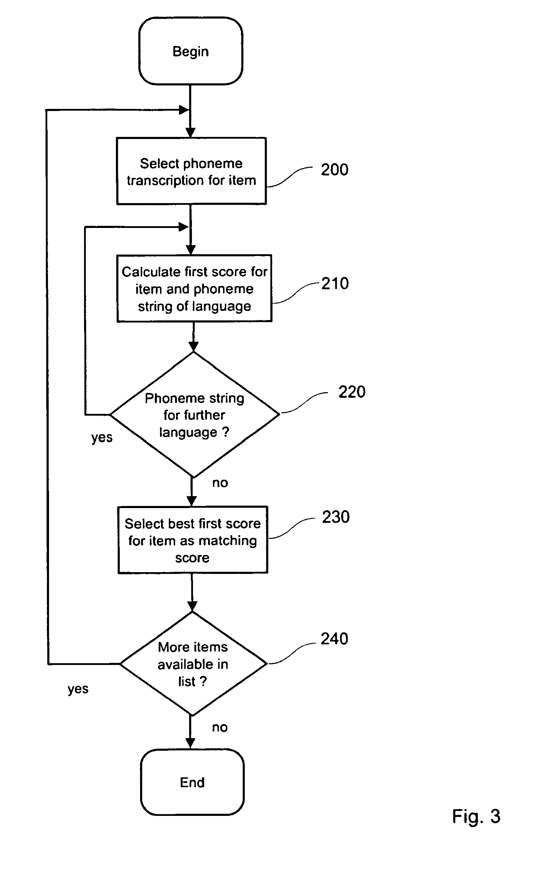

Details of the subword unit comparison step for an embodiment of the present invention are illustrated in Fig. 3. This embodiment is particularly useful when no language identification for the list items and/or subword unit transcriptions is available. A first item from the list 10 is selected in step 200, and the phoneme transcription of the item is retrieved.

In steps 210 and 220, first scores for matches of the phoneme transcription for the item with the phoneme strings of the recognition languages are calculated. For each of the recognition languages, a respective first score is determined by comparing the phoneme transcription with the phoneme string recognized for the language. This is repeated for all activated recognition languages.

The best first score for the item is selected in step 230 and recorded as matching score of the item. The later ranking of the items will be based on the matching scores, i. e., the respective best first score of the items. It is also possible to combine the different scores and to select the means of the score or to select any other combination of the scores.

The process of calculating matching scores for an item is repeated, if it is determined in step 240 that more items are available in the list 10. Otherwise, the calculation of matching scores for list items is finished.

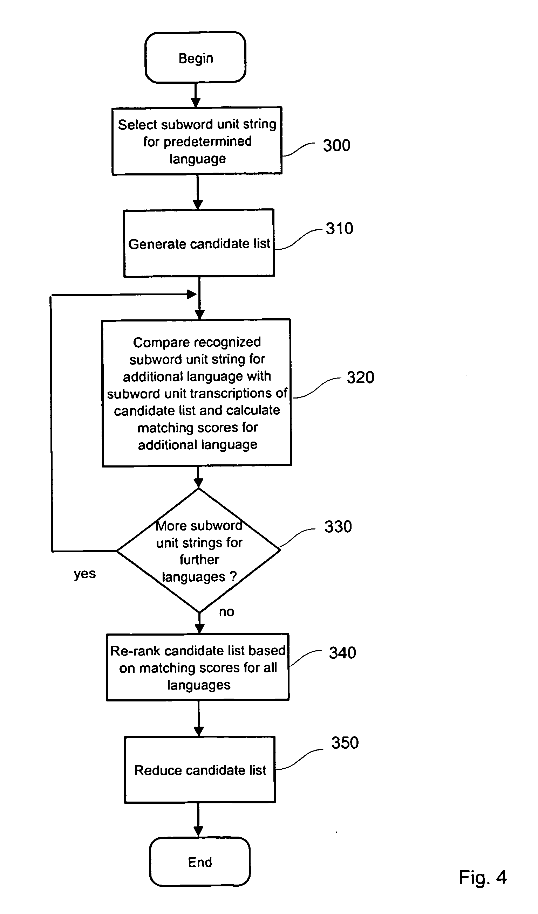

Fig. 4 shows a flow diagram for illustrating the comparison of subword unit strings with subword unit transcriptions and the generation of a candidate list according to a preferred embodiment of the invention.

In step 300, a subword unit string for a preferred language is selected. The preferred language is usually the mother language of the user. The preferred language may be input by the user or be preset, e. g., according to a geographic region.

A larger than usual candidate list 11 is generated based on the comparison results of the selected subword unit string with the subword unit transcriptions of the list 10 in step 310.

Next, the recognized subword unit string for an additional language is compared with the subword unit transcriptions of items listed in the candidate list 11 and matching scores for the additional language are calculated. This is repeated for all additional languages that have been activated (step 330).

The candidate list is re-ranked in step 340 based on matching scores for the items in the candidate list for all languages. This means that items that had initially a low matching score for the predetermined language may receive a better score for an additional language and, thus, be ranked up in the candidate list. Since the comparison of the subword unit strings for the additional languages is not performed with the original (possibly very large) list 10, but with the smaller candidate list 11, the computational effort of the comparison step can be reduced. This approach is usually justified since the pronunciations of the list items in different languages do not deviate too much. In this case, the user's mother language may be used for a first selection of list items, and the selected items may be rescored based on the subword unit recognition results for the other languages.

The (rather large) candidate list is pruned in step 350 and cut back to a size suitable as vocabulary size for the second speech recognizer.

The present invention allows multilingual items to be selected from a list while the language that the user applies for pronunciation of the list items is not known. The present invention is based on a two step speech recognition approach which uses a first subword unit recognition to preselect candidates for the second, more accurate recognition pass. The invention reduces the computation time and memory requirements for multilingual speech recognition.

## Claims

1. Speech recognition apparatus for selecting, via a speech input (6), an item from a list (10) of items, comprising
a subword unit speech recognition means (1) for recognizing a string of subword units for the speech input (6);
a subword unit comparing means (2) for comparing the recognized string of subword units with subword unit transcriptions of the list items and for generating a candidate list (11) of the best matching items based on the comparison results;
a second speech recognition means (3) for recognizing and selecting an item from the candidate list (11), which best matches the speech input (6),
**characterized in that**
at least two subword unit speech recognition means (1) are provided, each subword unit speech recognition means (1) being configured to recognize subword units of a different language; and
the subword unit comparing means (2) is configured to compare the strings of subword units recognized by the at least two subword unit speech recognition means (1) with the subword unit transcriptions of the list items and to insert the best matching items in the candidate list (11), the apparatus further comprising speech recognition control means (4) to control the operation of the subword unit speech recognition means (1), the speech recognition control means (4) being configured to activate at least two of the subword unit speech recognition means (1), wherein language identification means (5) are provided for identifying the language or languages of the list items, wherein the activation of the at least two subword unit speech recognition means (1) is based on the identified language(s) of the list items.

2. Speech recognition apparatus according to claim 1, wherein the activation of the at least two subword unit speech recognition means (1) is based on a preferred language of a user, in particular his mother language.

3. Speech recognition apparatus according to claim 1 or 2, wherein the language identification of a list item is based on a language identifier stored in association with the list item or on a phonetic property of the subword unit transcription of the list item.

4. Speech recognition apparatus according to at least one of the preceding claims, wherein the subword unit comparing means (2) is configured to compare a recognized subword unit string output from a subword unit speech recognition means (1) for a certain language only with subword unit transcriptions corresponding to the same language.

5. Speech recognition apparatus according to at least one of the preceding claims, wherein the subword unit comparing means (2) is configured to calculate a matching score for each list item, which indicates a match of a recognized subword unit string with the subword unit transcription of a list item, the calculation of the matching score accounting for insertions and deletions of subword units, the subword unit comparing means (2) being further configured to rank the list items according to their matching scores and to list the items with the best matching scores in the candidate list (11).

6. Speech recognition apparatus according to claim 5, wherein the subword unit comparing means (2) is configured to generate the candidate list (11) of the best matching items based on the recognized subword unit strings output from the subword unit speech recognition means (1) for different languages by calculating first scores for matches of a subword unit transcription of a list item with each of the subword unit strings of the different languages and selecting the best first score of the item as matching score of the item.

7. Speech recognition apparatus according to claim 5 or 6, wherein the subword unit comparing means (2) is configured to compare the string of subword units recognized from a predetermined subword unit speech recognition means (1) with subword unit transcriptions of items of the entire list (10) and to generate the candidate list (11) of the best matching items based on the matching scores of the items, the subword unit comparing means (2) being further configured to compare the at least one string of subword units recognized from the remaining subword unit speech recognition means (1) with subword unit transcriptions of items of the candidate list (11) and to re-rank the candidate list (11) based on the matching scores of the candidate list items for the different languages.

8. Speech recognition apparatus according to at least one of the preceding claims, wherein a plurality of subword unit transcriptions in different languages for a list item are provided, and the subword unit comparing means (2) is configured to compare a recognized subword unit string output from a subword unit speech recognition means (1) for a certain language only with the subword unit transcription of an item corresponding to the same language.

9. Speech recognition apparatus according to at least one of the preceding claims, wherein a subword unit speech recognition means (1) is configured to compare the speech input (6) with a plurality of subword units for a language, to calculate a measure of similarity between a subword unit and at least a part of the speech input (6), and to generate the best matching string of subword units for the speech input (6) in terms of the similarity measure.

10. Speech recognition apparatus according to at least one of the preceding claims, wherein a subword unit speech recognition means (1) generates a graph of subword units for the speech input (6), including at least one alternative subword unit for a part of the speech input (6).

11. Speech recognition apparatus according to at least one of the preceding claims, wherein a subword unit corresponds to a phoneme or a syllable of a language.

12. Speech recognition apparatus according to at least one of the preceding claims, wherein the second speech recognition means (3) is configured to compare the speech input (6) with acoustic representations of the candidate list items, to calculate a measure of similarity between an acoustic representation of a candidate list item and the speech input (6), and to select the candidate list item having the best matching acoustic representation for the speech input (6) in terms of the similarity measure.

13. Speech recognition method for selecting, via a speech input (6), an item from a list (10) of items, comprising the steps: recognizing a string of subword units for the speech input (6); comparing the recognized string of subword units with subword unit transcriptions of the list items and generating a candidate list (11) of the best matching items based on the comparison results; and recognizing and selecting an item from the candidate list (11) which best matches the speech input (6),
**characterized in that**
at least two strings of subword units are recognized for the speech input (6), the recognized strings of subword units corresponding to different languages; and
the at least two strings of subword units are compared with the subword unit transcriptions of the list items and the best matching items are listed in the candidate list (11), wherein a language identification step is provided for identifying the language or languages of the list items, wherein the activation of the recognition of a string of subword units for a language is based on the identified languages of the list items.

14. Speech recognition method according to claim 13, comprising a selection step for selecting at least one of the subword unit strings for comparison with the subword unit transcriptions of the list items, preferably according to the mother language of a user.

15. Speech recognition method according to claim 14, wherein the comparison of non-selected subword unit strings is performed only with subword unit transcriptions of items enlisted in the candidate list (11) which is generated based on the comparison results of the selected subword unit string, the candidate list (11) being subsequently ranked according to the comparison results for subword unit strings of all languages.

16. Speech recognition method according to at least one of claims 13 to 15, wherein the comparison of a recognized subword unit string for a certain language is performed only with subword unit transcriptions corresponding to the same language.

17. Speech recognition method according to at least one of claims 13 to 16, wherein a matching score for each list item, which indicates a match between a recognized subword unit string and the subword unit transcription of a list item, is calculated, the calculation of the matching score accounting for insertions and deletions of subword units in the recognized subword unit string.

## Patentansprüche

1. Spracherkennungsvorrichtung zum Auswählen eines Elements mittels Spracheingabe (6) aus einer Liste (10) von Elementen, umfassend
ein Wortuntereinheitspracherkennungsmittel (1) zum Erkennen einer Folge von Wortuntereinheiten für die Spracheingabe (6);
ein Wortuntereinheitvergleichsmittel (2) zum Vergleichen der erkannten Folge von Wortuntereinheiten mit Wortuntereinheittranskriptionen der Listenelemente und zum Erzeugen einer Kandidatenliste (11) der am Besten übereinstimmenden Elemente basierend auf den Vergleichsergebnissen;
ein zweites Spracherkennungsmittel (3) zum Erkennen und Auswählen eines Elements von der Kandidatenliste (11), welches mit der Spracheingabe (6) am Besten übereinstimmt,
**dadurch gekennzeichnet, dass**
mindestens zwei Wortuntereinheitspracherkennungsmittel (1) vorgesehen sind, wobei jedes Wortuntereinheitspracherkennungsmittel (1) zum Erkennen von Wortuntereinheiten einer anderen Sprache ausgestaltet ist; und
das Wortuntereinheitvergleichsmittel (2) ausgestaltet ist zum Vergleichen der Folgen von Wortuntereinheiten, die von den mindestens zwei Wortuntereinheitspracherkennungsmitteln (1) erkannt wurden, mit den Wortuntereinheittranskriptionen der Listenelemente und zum Einfügen der am Besten übereinstimmenden Elemente in die Kandidatenliste (11), wobei die Vorrichtung des Weiteren Spracherkennungssteuerungsmittel (4) zum Steuern des Betriebs der Wortuntereinheitspracherkennungsmittel (1) aufweist, wobei das Spracherkennungssteuerungsmittel (4) zum Aktivieren von mindestens zwei der Wortuntereinheitspracherkennungsmittel (1) ausgestaltet ist, wobei ein Sprachidentifikationsmittel (5) zum Identifizieren der Sprache oder Sprachen der Listenelemente vorgesehen ist, wobei die Aktivierung der mindestens zwei Wortuntereinheitspracherkennungsmittel (1) auf der (den) identifizierten Sprache(n) der Listenelemente basiert.

2. Spracherkennungsvorrichtung nach Anspruch 1, wobei die Aktivierung der mindestens zwei Wortuntereinheitspracherkennungsmittel (1) auf einer bevorzugten Sprache eines Benutzers, insbesondere seiner Muttersprache, basiert.

3. Spracherkennungsvorrichtung nach Anspruch 1 oder 2, wobei die Sprachidentifikation eines Listenelements auf einem Sprachbezeichner, der in Verbindung mit dem Listenelement gespeichert ist, oder auf einer phonetischen Eigenschaft der Wortuntereinheitstranskription des Listenelements basiert.

4. Spracherkennungsvorrichtung nach einem der vorstehenden Ansprüche, wobei das Wortuntereinheitvergleichsmittel (2) zum Vergleichen einer erkannten Wortuntereinheitsfolge, die von einer Wortuntereinheitspracherkennungsvorrichtung (1) für eine bestimmte Sprache ausgegeben wurde, nur mit Wortuntereinheitstranskriptionen, die derselben Sprache entsprechen, ausgestaltet ist.

5. Spracherkennungsvorrichtung gemäß einem der vorstehenden Ansprüche, wobei das Wortuntereinheiterkennungsmittel (2) zum Berechnen einer Übereinstimmungswertung für jedes Listenelement ausgestaltet ist, welche eine Übereinstimmung einer erkannten Wortuntereinheitsfolge mit der Wortuntereinheitstranskription eines Listelements angibt, wobei die Berechnung der Übereinstimmungswertung Einfügungen und Löschungen von Wortuntereinheiten berücksichtigt, wobei das Wortuntereinheitvergleichsmittel (2) des Weiteren zum Ordnen der Listenelemente gemäß ihrer Übereinstimmungswertungen und zum Auflisten der Elemente mit den besten Übereinstimmungswertungen in der Kandidatenliste (11) ausgestaltet ist.

6. Spracherkennungsvorrichtung nach Anspruch 5, wobei das Wortuntereinheitvergleichsmittel (2) ausgestaltet ist zum Erzeugen der Kandidatenliste (11) der am Besten übereinstimmenden Elemente basierend auf den erkannten Wortuntereinheitsfolgen, die von den Wortuntereinheitserkennungsmitteln (1) für verschiedene Sprachen ausgegeben wurden, durch Berechnen erster Wertungen für Übereinstimmungen einer Wortuntereinheitstranskription eines Listenelements mit jeder der Wortuntereinheitsfolgen der verschiedenen Sprachen und Auswählen der besten ersten Wertung des Elements als Übereinstimmungswertung für das Element.

7. Spracherkennungsvorrichtung nach Anspruch 5 oder 6, wobei das Wortuntereinheitvergleichsmittel (2) ausgestaltet ist zum Vergleichen der Folge von Wortuntereinheiten, die von einem vorbestimmten Wortuntereinheiterkennungsmittel (1) erkannt wurden, mit Wortuntereinheitstranskriptionen von Elementen der gesamten Liste (10) und zum Erzeugen der Kandidatenliste (11) der am Besten übereinstimmenden Elemente basierend auf den Übereinstimmungswertungen der Elemente, wobei das Wortuntereinheitvergleichsmittel (2) des Weiteren ausgestaltet ist zum Vergleichen der mindestens einen Folge von Wortuntereinheiten, die von den übrigen Wortuntereinheiterkennungsmitteln (1) erkannt wurde, mit Wortuntereinheitstranskriptionen von Elementen der Kandidatenliste (11), und zum Neuordnen der Kandidatenliste (11) basierend auf den Übereinstimmungswertungen der Kandidatenlistenelemente für die verschiedenen Sprachen.

8. Spracherkennungsvorrichtung nach einem der vorstehenden Ansprüche, wobei mehrere Wortuntereinheitstranskriptionen in verschiedenen Sprachen für ein Listenelement bereitgestellt werden, und das Wortuntereinheitvergleichsmittel (2) zum Vergleichen einer erkannten Wortuntereinheitsfolge, die von einem Wortuntereinheiterkennungsmittel (1) für eine bestimmte Sprache ausgegeben wurde, nur mit der Wortuntereinheitstranskription eines Elements, die der gleichen Sprache entspricht, ausgestaltet ist.

9. Spracherkennungsvorrichtung nach einem der vorstehenden Ansprüche, wobei ein Wortuntereinheitspracherkennungsmittel (1) ausgestaltet ist zum Vergleichen der Spracheingabe (6) mit mehreren Wortuntereinheiten für eine Sprache, zum Berechnen eines Ähnlichhkeitsmaßes zwischen einer Wortuntereinheit und mindestens einem Teil der Spracheingabe (6) und zum Erzeugen der bezüglich des Ähnlichkeitsmaßes am Besten übereinstimmenden Folge von Wortuntereinheiten für die Spracheingabe (6).

10. Spracherkennungsvorrichtung nach einem der vorstehenden Ansprüche, wobei ein Wortuntereinheitspracherkennungsmittel (1) ein Graph von Wortuntereinheiten für die Spracheingabe (6) erzeugt, der mindestens eine alternative Wortuntereinheit für einen Teil der Spracheingabe (6) umfasst.

11. Spracherkennungsvorrichtung nach einem der vorstehenden Ansprüche, wobei eine Wortuntereinheit einem Phonem oder einer Silbe einer Sprache entspricht.

12. Spracherkennungsvorrichtung nach einem der vorstehenden Ansprüche, wobei das zweite Spracherkennungsmittel (3) zum Vergleichen der Spracheingabe (6) mit akustischen Repräsentationen der Kandidatenlistenelemente, zum Berechnen eines Ähnlichkeitsmaßes zwischen einer akustischen Repräsentation eines Kandidatenlistenelements und der Spracheingabe (6), und zum Auswählen des Kandidatenlistenelements, das die am Besten übereinstimmende akustische Repräsentation für die Spracheingabe (6) bezüglich des Ähnlichkeitsmaßes aufweist, ausgestaltet ist.

13. Spracherkennungsverfahren zum Auswählen eines Elements mittels Spracheingabe (6) von einer liste (10) von Elementen, die Schritte umfassend:
Erkennen einer Folge von Wortuntereinheiten für die Spracheingabe (6);
Vergleichen der erkannten Folge von Wortuntereinheiten mit Wortuntereinheitstranskriptionen der Listenelemente und Erzeugen einer Kandidatenliste (11) der am Besten übereinstimmenden Elemente basierend auf den Vergleichsergebnissen; und
Erkennen und Auswählen eines Elements von der Kandidatenliste (11), welches am Besten mit der Spracheingabe (6) übereinstimmt,
**dadurch gekennzeichnet, dass**
mindestens zwei Folgen von Wortuntereinheiten für die Spracheingabe (6) erkannt werden, wobei die erkannten Folgen von Wortuntereinheiten verschiedenen Sprachen entsprechen; und
die mindestens zwei Folgen von Wortuntereinheiten mit den Wortuntereinheitstranskriptionen der Listenelemente verglichen werden und die am Besten übereinstimmenden Elemente in der Kandidatenliste (11) aufgelistet werden, wobei ein Sprachidentifikationsschritt zum Identifizieren der Sprache oder Sprachen der Listenelemente vorgesehen ist, wobei die Aktivierung der Erkennung einer Folge von Wortuntereinheiten für eine Sprache auf den identifizierten Sprachen der Listenelemente basiert.

14. Spracherkennungsverfahren nach Anspruch 13, umfassend einen Auswahlschritt zum Auswählen von mindestens einer der Wortuntereinheitsfolgen für einen Vergleich mit den Wortuntereinheitstranskriptionen der Listenelemente, vorzugsweise gemäß der Muttersprache eines Benutzers.

15. Spracherkennungsverfahren nach Anspruch 14, wobei der Vergleich von nicht ausgewählten Wortuntereinheitsfolgen nur mit Wortuntereinheitstranskriptionen von Elementen, die in der Kandidatenliste (11) aufgelistet sind, welche basierend auf den Vergleichsergebnissen der ausgewählten Wortuntereinheitsfolgen erzeugt wird, erfolgt, wobei die Kandidatenliste (11) nachfolgend gemäß den Vergleichsergebnissen für Wortuntereinheitsfolgen von allen Sprachen geordnet wird.

16. Spracherkennungsverfahren nach mindestens einem der Ansprüche 13-15, wobei der Vergleich einer erkannten Wortuntereinheitsfolge für eine bestimmte Sprache nur mit Wortuntereinheitstranskriptionen erfolgt, die derselben Sprache entsprechen.

17. Spracherkennungsverfahren nach mindestens einem der Ansprüche 13-16, wobei für jedes Listenelement eine Übereinstimmungswertung, welche eine Übereinstimmung zwischen einer erkannten Wortuntereinheitsfolge und der Wortuntereinheitstranskription eines Listenelements angibt, berechnet wird, wobei die Berechnung der Übereinstimmungswertung Einfügungen und Löschungen von Wortuntereinheiten in der erkannten Wortuntereinheitsfolge berücksichtigt.

## Revendications

1. Dispositif de reconnaissance vocale pour sélectionner, via une entrée (6) vocale, un élément parmi une liste (10) d'éléments, comprenant :
un moyen (1) de reconnaissance vocale d'unités de sous-mots, destiné à reconnaître une chaîne d'unités de sous-mots pour l'entrée (6) vocale ; un moyen (2) de comparaison d'unités de sous-mots, destiné à comparer la chaîne reconnue d'unités de sous-mots à des transcriptions d'unités de sous-mots des éléments de la liste et à engendrer une liste (11) de candidats des éléments les plus concordants, sur la base des résultats de la comparaison ; et un deuxième moyen (3) de reconnaissance vocale, destiné à reconnaître et à sélectionner un élément parmi la liste (11) de candidats, qui concorde le mieux avec l'entrée (6) vocale,
**caractérisé en ce que** :
au moins deux moyens (1) de reconnaissance vocale d'unités de sous-mots sont prévus, chaque moyen (1) de reconnaissance vocale d'unités de sous-mots étant configuré pour reconnaître des unités de sous-mots dans une langue différente ; et
le moyen (2) de comparaison d'unités de sous-mots est configuré pour comparer les chaînes d'unités de sous-mots reconnues par les au moins deux moyens (1) de reconnaissance vocale d'unités de sous-mots, avec les transcriptions d'unités de sous-mots des éléments de la liste et pour insérer les éléments les plus concordants dans la liste (11) de candidats, le dispositif comprenant, en outre, un moyen (4) de commande de reconnaissance vocale, destiné à commander le fonctionnement des moyens (1) de reconnaissance vocale d'unités de sous-mots, le moyen (4) de commande de reconnaissance vocale étant configuré pour activer au moins deux des moyens (1) de reconnaissance vocale d'unités de sous-mots, dans lequel des moyens (5) d'identification de langue sont prévus pour identifier la ou les langue(s) des éléments de la liste, dans lequel l'activation des au moins deux moyens (1) de reconnaissance vocale d'unités de sous-mots est fondée sur la ou les langue(s) identifiée(s) des éléments de la liste.

2. Dispositif de reconnaissance vocale selon la revendication 1, dans lequel l'activation des au moins deux moyens (1) de reconnaissance vocale d'unités de sous-mots est fondée sur une langue préférée d'un utilisateur, en particulier, sur sa langue maternelle.

3. Dispositif de reconnaissance vocale selon la revendication 1 ou 2, dans lequel l'identification de la langue d'un élément de la liste est fondée sur un identifiant de langue stocké en association avec l'élément de la liste ou sur une propriété phonétique de la transcription d'unités de sous-mots de l'élément de la liste.

4. Dispositif de reconnaissance vocale selon l'une au moins des revendications précédentes, dans lequel le moyen (2) de comparaison d'unités de sous-mots est configuré pour comparer une chaîne d'unités de sous-mots reconnue, délivrée en sortie d'un moyen (1) de reconnaissance vocale d'unités de sous-mots correspondant à une certaine langue uniquement avec des transcriptions d'unités de sous-mots correspondant à la même langue.

5. Dispositif de reconnaissance vocale selon l'une au moins des revendications précédentes, dans lequel le moyen (2) de comparaison d'unités de sous-mots est configuré pour calculer un indice de concordance pour chaque élément de la liste, qui indique une concordance d'une chaîne d'unités de sous-mots reconnue avec la transcription d'unités de sous-mots d'un élément de la liste, le calcul de l'indice de concordance prenant en compte des insertions et des suppressions d'unités de sous-mots, le moyen (2) de comparaison d'unités de sous-mots étant configuré, en outre, pour classer les éléments de la liste en fonction de leur indice de concordance et pour faire figurer les éléments ayant les meilleurs indices de concordance dans la liste (11) de candidats.

6. Dispositif de reconnaissance vocale selon la revendication 5, dans lequel le moyen (2) de comparaison d'unités de sous-mots est configuré pour engendrer la liste (11) de candidats des éléments les plus concordants, sur la base des chaînes reconnues d'unités de sous-mots, délivrées en sortie des moyens (1) de reconnaissance vocale d'unités de sous-mots pour différentes langues, en calculant des premiers indices pour des concordances d'une transcription d'unités de sous-mots d'un élément de la liste avec chacune des chaînes d'unités de sous-mots des différentes langues, et en sélectionnant le premier meilleur indice de l'élément en tant qu'indice de concordance de l'élément.

7. Dispositif de reconnaissance vocale selon la revendication 5 ou 6, dans lequel le moyen (2) de comparaison d'unités de sous-mots est configuré pour comparer la chaîne reconnue d'unités de sous-mots, issue d'un moyen (1) de reconnaissance vocale d'unités de sous-mots prédéterminé, avec des transcriptions d'unités de sous-mots d'éléments de la liste (10) entière et pour engendrer la liste (11) de candidats des éléments les plus concordants, sur la base des indices de concordance des éléments, le moyen (2) de comparaison d'unités de sous-mots étant configuré, en outre, pour comparer ladite au moins une chaîne d'unités de sous-mots reconnue, issue du moyen (1) de reconnaissance vocale d'unités de sous-mots restant, avec les transcriptions d'unités de sous-mots de la liste (11) de candidats et pour reclasser la liste (11) de candidats, sur la base des indices de concordance des éléments de la liste de candidats pour les différentes langues.

8. Dispositif de reconnaissance vocale selon l'une au moins des revendications précédentes, dans lequel une pluralité de transcriptions d'unités de sous-mots dans différentes langues pour un élément de la liste est fournie, et le moyen (2) de comparaison d'unités de sous-mots est configuré pour comparer une chaîne d'unités de sous-mots reconnue, délivrée en sortie d'un moyen (1) de reconnaissance vocale d'unités de sous-mots pour une certaine langue uniquement avec la transcription d'unités de sous-mots d'un élément correspondant à la même langue.

9. Dispositif de reconnaissance vocale selon l'une au moins des revendications précédentes, dans lequel un moyen (1) de reconnaissance vocale d'unités de sous-mots est configuré pour comparer l'entrée (6) vocale avec une pluralité d'unités de sous-mots pour une langue, pour calculer une mesure de similarité entre une unité de sous-mot et une partie au moins de l'entrée (6) vocale, et pour engendrer la chaîne d'unités de sous-mots concordant le mieux avec l'entrée (6) vocale, en termes de mesure de similarité.

10. Dispositif de reconnaissance vocale selon l'une au moins des revendications précédentes, dans lequel un moyen (1) de reconnaissance vocale d'unités de sous-mots engendre un graphe d'unités de sous-mots pour l'entrée (6) vocale, comprenant au moins une autre unité de sous-mot pour une partie de l'entrée (6) vocale.

11. Dispositif de reconnaissance vocale selon l'une au moins des revendications précédentes, dans lequel une unité de sous-mot correspond à un phonème ou à une syllabe dans une langue.

12. Dispositif de reconnaissance vocale selon l'une au moins des revendications précédentes, dans lequel le deuxième moyen (3) de reconnaissance vocale est configuré pour comparer l'entrée (6) vocale avec des représentations acoustiques des éléments de la liste de candidats, pour calculer une mesure de similarité entre une représentation acoustique d'un élément de la liste de candidats et l'entrée (6) vocale, et pour sélectionner l'élément de la liste de candidats ayant la représentation acoustique concordant le mieux avec l'entrée (6) vocale, en termes de mesure de similarité.

13. Procédé de reconnaissance vocale pour sélectionner, via une entrée (6) vocale, un élément parmi une liste (10) d'éléments, comprenant les étapes consistant à :
reconnaître une chaîne d'unités de sous-mots pour l'entrée (6) vocale ;
comparer la chaîne reconnue d'unités de sous-mots avec des transcriptions d'unités de sous-mots des éléments de la liste et engendrer une liste (11) de candidats des éléments les plus concordants, sur la base des résultats de comparaison ; et
reconnaître et sélectionner un élément, parmi la liste (11) de candidats, qui concorde le mieux avec l'entrée (6) vocale,
**caractérisé en ce que** :
au moins deux chaînes d'unités de sous-mots sont reconnues pour l'entrée (6) vocale, les chaînes reconnues d'unités de sous-mots correspondant à des langues différentes ; et
lesdites au moins deux chaînes d'unités de sous-mots sont comparées aux transcriptions d'unités de sous-mots des éléments de la liste et les éléments les plus concordants sont inscrits dans la liste (11) de candidats, dans lequel une étape d'identification de langue est prévue pour identifier la langue ou les langues des éléments de la liste, dans lequel l'activation de la reconnaissance d'une chaîne d'unités de sous-mots pour une langue est fondée sur les langues identifiées des éléments de la liste.

14. Procédé de reconnaissance vocale selon la revendication 13, comprenant une étape de sélection pour sélectionner au moins l'une des chaînes d'unités de sous-mots à des fins de comparaison avec les transcriptions d'unités de sous-mots des éléments de la liste, de préférence, en fonction de la langue maternelle d'un utilisateur.

15. Procédé de reconnaissance vocale selon la revendication 14, dans lequel la comparaison de chaînes d'unités de sous-mots non sélectionnées est effectuée seulement avec des transcriptions d'unités de sous-mots d'éléments inscrits dans la liste (11) de candidats qui est engendrée sur la base des résultats de comparaison de la chaîne d'unités de sous-mots sélectionnée, la liste (11) de candidats étant classée ultérieurement en fonction des résultats de comparaison pour des chaînes d'unités de sous-mots dans toutes les langues.

16. Procédé de reconnaissance vocale selon l'une au moins des revendications 13 à 15, dans lequel la comparaison d'une chaîne d'unités de sous-mots reconnue pour une certaine langue est effectuée uniquement avec des transcriptions d'unités de sous-mots correspondant à la même langue.

17. Procédé de reconnaissance vocale selon l'une au moins des revendications 13 à 16, dans lequel un indice de concordance pour chaque élément de la liste, qui indique une concordance entre une chaîne reconnue d'unités de sous-mots et la transcription d'unités de sous-mots d'un élément de la liste, est calculé, le calcul de l'indice de concordance prenant en compte des insertions et des suppressions d'unités de sous-mots dans la chaîne reconnue d'unités de sous-mots.
